# EUROPÄISCHE PATENTSCHRIFT

(11) **EP 2 545 305 B1**
(45) Veröffentlichungstag und Bekanntmachung des Hinweises auf die Patenterteilung: **06.04.2016**
(21) Anmeldenummer: 11703695.4
(22) Anmeldetag: 16.02.2011
(51) Int. Cl.: F16H 61/4008, F16H 61/4069, F16H 61/12, F16H 61/28, F16H 61/30

(54) **HYDRAULISCHES SYSTEM ZUR BETÄTIGUNG EINES FORMSCHLÜSSIGEN SCHALTELEMENTES EINER GETRIEBEEINRICHTUNG**
HYDRAULIC SYSTEM FOR ACTUATING AN INTERLOCKING SWITCHING ELEMENT OF A GEARING DEVICE
SYSTÈME HYDRAULIQUE POUR ACTIONNER UN ÉLÉMENT DE CHANGEMENT DES RAPPORTS À COMPLÉMENTARITÉ DE FORME D'UN MÉCANISME DE TRANSMISSION

(30) Priorität: 11.03.2010 DE 102010002747
(43) Veröffentlichungstag der Anmeldung: 16.01.2013
(73) Patentinhaber: ZF Friedrichshafen AG, 88038 Friedrichshafen (DE)
(72) Erfinder: SCHMIDT, Thilo, 88074 Meckenbeuren (DE); STRAUB, Manuel, 88074 Meckenbeuren (DE)
(86) Internationale Anmeldenummer: PCT/EP2011/052277
(87) Internationale Veröffentlichungsnummer: WO 2011/110409

(56) Entgegenhaltungen:
- EP-A2- 1 621 777
- DE-A1- 19 546 631
- US-A- 5 893 292

## Beschreibung

Die Erfindung betrifft ein hydraulisches System zur Betätigung eines formschlüssigen Schaltelementes einer Getriebeeinrichtung gemäß der im Oberbegriff des Patentanspruches 1 näher definierten Art.

Aus der Praxis bekannte und als Automatgetriebe ausgeführte Getriebevorrichtungen sind zum Darstellen verschiedener Übersetzungen mit Schaltelementen ausgeführt, über welche jeweils ein anliegendes Drehmoment reibschlüssig übertragbar ist. Bei Vorliegen einer Anforderung zum Darstellen einer definierten Übersetzung werden jeweils wenigstens eines oder mehrere der reibschlüssigen Schaltelemente aus dem Kraftfluss einer Getriebevorrichtung abgeschaltet, während wenigstens ein weiteres oder weitere reibschlüssige Schaltelemente zur Darstellung der angeforderten Übersetzung in den Kraftfluss der Getriebevorrichtung zugeschaltet werden. Während des Zuschaltvorganges eines reibschlüssigen Schaltelementes sind zur Gewährleistung eines gewünschten Schaltkomforts keine besonderen Synchronisiermaßnahmen erforderlich, da ein angestrebter Schaltkomfort mittels reibschlüssiger Schaltelemente bei definierten Anpressdrücken innerhalb eines breiten Differenzdrehzahlbandes erreichbar ist.

Da derartige Getriebevorrichtungen in an sich bekannter Art und Weise auf Grund von im Bereich von geöffneten reibschlüssigen Schaltelementen auftretenden Schleppverlusten mit nur unzureichenden Wirkungsgraden betreibbar sind, werden bestimmte reibschlüssige Schaltelemente durch formschlüssige Schaltelemente ersetzt. Bei solchen Automatgetrieben, die sowohl mit reibschlüssigen Schaltelementen als auch mit mindestens einem formschlüssigen Schaltelement und mit einer entsprechenden Radsatzkonstruktion ausgeführt sind, ist zur Umsetzung einer definierten Schaltanforderung mindestens ein formschlüssiges Schaltelement in einen Kraftfluss einer Getriebevorrichtung zuzuschalten.

Formschlüssige Schaltelemente mit oder ohne zusätzliche konstruktive Synchronisiereinrichtungen sind im Vergleich zu reibschlüssigen Schaltelementen nur bei sehr geringen Differenzdrehzahlen, d. h. nahe ihrer Synchrondrehzahl, komfortabel schaltbar, wodurch ein Betrieb einer mit wenigstens einem formschlüssigen Schaltelement ausgeführten und als Automatgetriebe ausgebildeten Getriebevorrichtung zumindest während der Durchführung bestimmter Schaltungen, an welchen ein formschlüssiges Schaltelement beteiligt ist, in unerwünschtem Umfang beeinträchtigt ist.

Darüber hinaus sind formschlüssige Schaltelemente bzw. Klauenschaltelemente beispielsweise in Planetengetrieben nur dann einsetzbar, wenn sie bei Hochschaltungen von einem niedrigen Gang in einen höheren Gang abgeschaltet werden, wenn Schaltungen zugkraftunterbrechungsfrei durchzuführen sind. Daraus resultiert wiederum, dass formschlüssige Schaltelemente bzw. Klauenschaltelemente im Wesentlichen zur Darstellung niedriger Gänge in einen Kraftfluss einer Getriebeeinrichtung zugeschaltet werden, während welchen eine Antriebsmaschine eines Fahrzeuges bei aktivierter Motor-Start-Stop-Funktion betriebszustandsabhängig temporär abgeschaltet wird.

Formschlüssige Schaltelemente werden über vorzugsweise als Vorsteuerventile ausgeführte elektrische Aktoren eingelegt. Dabei wird zwischen Vorsteuerventilen unterschieden, bei welchen der Vorsteuerdruck, in dessen Abhängigkeit der Betätigungsdruck des formschlüssigen Schaltelementes eingestellt wird, mit steigendem Steuerstrom zunimmt und bei welchen der Vorsteuerdruck mit steigendem Steuerstrom abnimmt.

Wird ein formschlüssiges Schaltelement über ein Vorsteuerventil, bei welchem der Vorsteuerdruck proportional zum Steuerstrom ist, aktiv eingelegt, wird das formschlüssige Schaltelement bei Reduzierung des Vorsteuerdruckes ausgelegt, wenn der Betätigungsdruck ebenfalls proportional zum Vorsteuerdruck ist. Durch die Ansteuerung des formschlüssigen Schaltelementes über ein proportionales Vorsteuerdruckventil soll das formschlüssige Schaltelement beim Ausfall der elektrischen Ansteuerung zur Gewährleistung eines gewünschten Sicherheitsstandards in einen sicheren Zustand, vorzugsweise in seinen geöffneten Betriebszustand, überführt werden.

Wenn die hydraulische Druckversorgung von hydraulisch betätigbaren Schaltelementen üblicherweise über eine antriebsmaschinenseitig angetriebene Hydraulikpumpe mit hydraulischem Druck versorgt wird, fällt der hydraulische Versorgungsdruck im hydraulischen System einer Getriebeeinrichtung bei einer vorzugsweise über ein Motor-Start-Stopp-System abgeschalteten Antriebsmaschine ab. Die in niedrigen Gangstufen zugeschalteten Klauenschaltelemente, die beispielsweise mit einem einfach wirkenden Kolben-Zylinder-System und mit einer in Öffnungsrichtung des formschlüssigen Schaltelementes wirkenden Federeinrichtung ausgeführt sind, werden bei abgeschalteter Druckversorgung über die Rückstellfeder in einen geöffneten Betriebszustand überführt.

Derartige konstruktive Ausführungen von formschlüssigen Schaltelementen weisen jedoch den Nachteil auf, dass die Rückstellfeder im Fahrbetrieb dauerhaft zu überdrücken ist, wenn das formschlüssige Schaltelement in geschlossenem Betriebszustand zu halten ist. Dabei ist besonders problematisch, dass über die Rückstellfeder eine hohe Rückstellkraft zur Verfügung zu stellen ist, da das formschlüssige Schaltelement gegen innere Reibkräfte und einem hydraulischen Widerstand des hydraulischen Systems dynamisch und schnell auslegbar sein soll.

Um ein selbsttätiges Auslegen eines formschlüssigen Schaltelementes zu vermeiden, ist aufgrund der hohen Rückstellkraft im Bereich der Rückstellfeder ein hoher in Schließrichtung des formschlüssigen Schaltelementes wirkender Betätigungsdruck vorzusehen.

Andererseits soll ein dauerhaftes Einlegen eines Klauenschaltelementes über eine in Schließrichtung des Klauenschaltelementes wirkende Einrückfeder aus Sicherheitsgründen vermieden werden, da eine solche Einrückfeder bei fehlerhafter Ansteuerung des Auslegedruckes des Klauenschaltelementes das formschlüssige Schaltelement automatisch einlegen würde.

Der nächstliegende bekanntgewordene Stand der Technik ist dem Dokument EP1621777 zu entnehmen.

Der vorliegenden Erfindung liegt daher die Aufgabe zugrunde, ein hydraulisches System zur Betätigung eines formschlüssigen Schaltelementes einer Getriebeeinrichtung zur Verfügung zu stellen, mittels dem bei einem Druckabfall im Hydrauliksystem ein formschlüssiges Schaltelement nicht automatisch ausgelegt wird und bei einem Ausfall der Bestromung eines den Betätigungsdruck einstellenden elektrischen Aktors und einem Übergang in den hydraulischen Notlauf das formschlüssige Schaltelement sicher geöffnet wird.

Erfindungsgemäß wird diese Aufgabe mit einem Hydrauliksystem mit den Merkmalen des Patentanspruches 1 gelöst.

Bei dem erfindungsgemäßen hydraulischen System zur Betätigung eines formschlüssigen Schaltelementes einer Getriebeeinrichtung mit zwei Kolbenräumen und wenigstens einem die Kolbenräume begrenzenden doppeltwirkenden Kolbenelement, welches im Bereich eines der Kolbenräume mit einem in Öffnungsrichtung des Schaltelementes wirkenden Betätigungsdruck und im Bereich des weiteren Kolbenraumes mit einem in Schließrichtung des Schaltelementes wirkenden Betätigungsdruck beaufschlagbar ist, ist der Betätigungsdruck über eine Ventileinrichtung dem einen oder dem anderen Kolbenraum zuführbar und die Ventileinrichtung über einen elektrohydraulischen Aktor mit einem Vorsteuerdruck betätigbar.

Erfindungsgemäß sind die Ventileinrichtung und der elektrische Aktor derart ausgeführt und miteinander wirkverbunden, dass bei einem Druckabfall eine in Schließrichtung des Schaltelementes wirkende hydraulische Gesamtkraftkomponente anliegt, während bei einem Ausfall der Bestromung des Aktors eine in Öffnungsrichtung des Schaltelementes wirkende hydraulische Gesamtkraftkomponente an dem Kolbenelement anliegt.

Durch die Ansteuerung des formschlüssigen Schaltelementes über den elektrohydraulischen Aktor und eine entsprechende Anbindung der über den elektrohydraulischen Aktor betätigten Ventileinrichtung an das formschlüssige Schaltelement wird sichergestellt, dass bei Einfall in den hydraulischen Notlauf bzw. bei Ausfall der Bestromung des elektrohydraulischen Aktors das formschlüssige Schaltelement sicher geöffnet wird und gleichzeitig bei Reduzierung des Betätigungsdrucks des formschlüssigen Schaltelementes in geschlossenem Betriebszustand gehalten wird, wenn der elektrohydraulische Aktor entsprechend bestromt wird.

Sowohl die in den Patentansprüchen angegebenen Merkmale als auch die in den nachfolgenden Ausführungsbeispielen des erfindungsgemäßen hydraulischen Systems angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Hydrauliksystems ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1a: ein vereinfachtes Schaltschema eines Teils einer ersten Ausführungsform des erfindungsgemäßen hydraulischen Systems;
- Fig. 1b: eine detaillierte Darstellung eines Schaltschemas des hydraulischen Systems gemäß Fig. 1a;
- Fig. 1c: Verläufe von Hydraulikdrücken in Kolbenräumen eines über das hydraulische System gemäß Fig. 1a betätigbaren formschlüssigen Schaltelementes über einem im Bereich eines elektrohydraulischen Aktors einstellbaren Vorsteuerdruck;
- Fig. 2a: eine Fig. 1a entsprechende Darstellung einer zweiten Ausführungsform des erfindungsgemäßen hydraulischen Systems;
- Fig. 2b: eine Fig. 1 b entsprechende Darstellung der zweiten Ausführungsform des hydraulischen Systems;
- Fig. 2c: eine Fig. 1 c entsprechende Darstellung von Druckverläufen in Kolbenräumen eines über das hydraulische System gemäß Fig. 2a ansteuerbaren formschlüssigen Schaltelementes;
- Fig. 3a: eine Fig. 1a entsprechende Darstellung eines dritten Ausführungsbeispieles des hydraulischen Systems;
- Fig. 3b: eine Fig. 1b entsprechende Darstellung des dritten Ausführungsbeispieles des hydraulischen Systems;
- Fig. 3c: eine Fig. 1c entsprechende Darstellung von Verläufen von im Bereich von Kolbenräumen eines formschlüssigen Schaltelementes über das hydraulische System gemäß Fig. 3a einstellbaren Drücken;
- Fig. 4a: eine Fig. 1a entsprechende Darstellung eines vierten Ausführungsbeispieles des erfindungsgemäßen hydraulischen Systems;
- Fig. 4b: eine Fig. 1b entsprechende Darstellung der vierten Ausführungsform des hydraulischen Systems; und
- Fig. 4c: eine Fig. 1c entsprechende Darstellung von Verläufen von über das hydraulische System gemäß Fig. 4a im Bereich von Kolbenräumen eines formschlüssigen Schaltelementes anlegbaren Betätigungsdrücken.

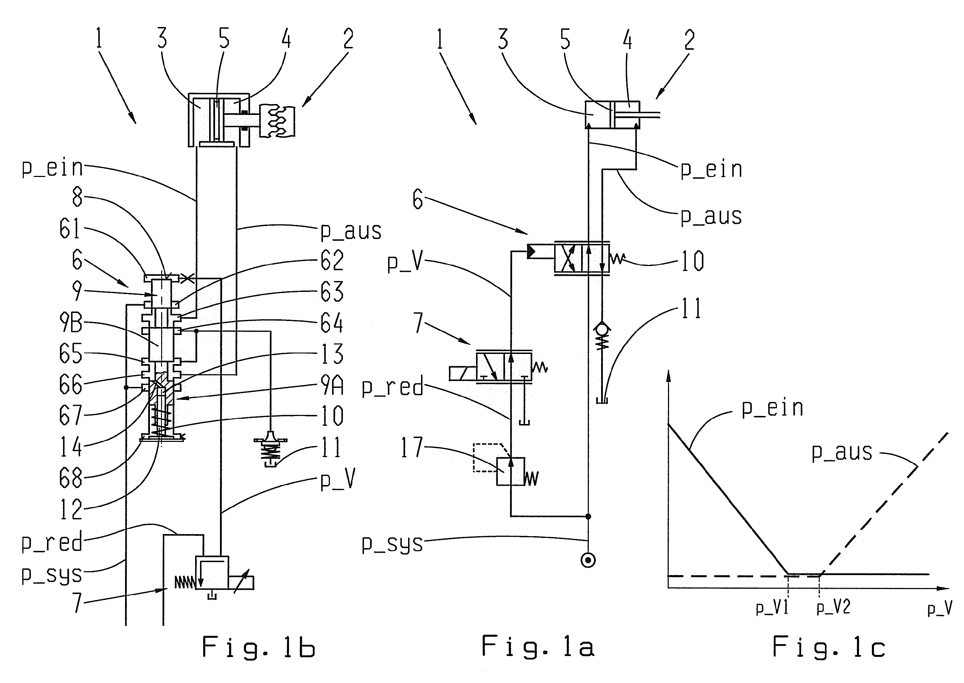

Fig. 1 a zeigt ein vereinfachtes Schaltschema eines Teils eines hydraulischen Systems 1 zur Betätigung eines formschlüssigen Schaltelementes 2 einer in der Zeichnung nicht näher dargestellten Getriebeeinrichtung. Das formschlüssige Schaltelement 2 ist mit zwei Kolbenräumen 3, 4 und einem die Kolbenräume begrenzenden doppeltwirkenden Kolbenelement 5 ausgebildet. Das Kolbenelement 5 ist im Bereich des Kolbenraumes 4 mit einem in Öffnungsrichtung des Schaltelementes 2 wirkenden Betätigungsdruck p_aus und im Bereich des weiteren Kolbenraumes 3 mit einem in Schließrichtung des Schaltelementes 2 wirkenden Betätigungsdruck p_ein beaufschlagbar.

Der Betätigungsdruck ist über eine vorliegend als 4/2-Wegeventil ausgeführte Ventileinrichtung 6 dem einen Kolbenraum 3 oder dem anderen Kolbenraum 4 zuführbar. Hierfür ist die Ventileinrichtung 6 über einen elektrohydraulischen Aktor 7, der vorliegend als Drucksteuerventil ausgeführt ist, mit einem Vorsteuerdruck p_V in der nachfolgend näher beschriebenen Art und Weise betätigbar.

In der in Fig. 1 b näher dargestellten Art und Weise liegt der im Bereich des elektrohydraulischen Aktors 7 eingestellte Vorsteuerdruck p_V an einer Wirkfläche 8 eines Ventilschiebers 9 der Ventileinrichtung 6 an. Gleichzeitig greift an dem Ventilschieber 9 eine dem Vorsteuerdruck p_V entgegenwirkende Federeinrichtung 10 an, wobei der Ventilschieber 9 bei geringen Vorsteuerdruckwerten in einer ersten umgeschobenen Endstellung von der Federeinrichtung 10 gehalten wird. Der Vorsteuerdruck p_V steht in Abhängigkeit eines am elektrohydraulischen Aktor 7 anliegenden Reduzierdruck p_red, der im hydraulischen System 1 im Bereich eines Druckreduzierventiles 17 in an sich bekannter Art und Weise eingestellt wird. Mit zunehmendem Steuerstrom des elektrohydraulischen Aktors 7 steigt der Vorsteuerdruck p_V zunehmend an und verschiebt den Ventilschieber 9 ausgehend von der ersten Endstellung zunehmend entgegen der Federkraft der Federeinrichtung 10 in seine zweite Endstellung.

Die Ventileinrichtung 6 ist vorliegend mit acht Steuerkanten 61 bis 68 ausgebildet, wobei an der zweiten Steuerkante 62 und an der siebten Steuerkante 67 jeweils ein Systemdruck p_sys des hydraulischen Systems 1 anliegt, der in Abhängigkeit der Stellung des Ventilschiebers 9 in entsprechend gewandelter Form in den ersten Kolbenraum 3 oder in den zweiten Kolbenraum 4 zur Betätigung des formschlüssigen Schaltelementes 2 weitergeleitet wird.

Im Bereich der Kolbenräume 3 und 4 stellen sich in Abhängigkeit des Vorsteuerdruckes p_V die in Fig. 1 c näher dargestellten Druckverläufe des Betätigungsdruckes p_ein des Kolbenraumes 3 und des Betätigungsdruckes p_aus des Kolbenraumes 4 ein. Während der Betätigung des formschlüssigen Schaltelementes 2 über das doppeltwirkende Kolbenelement 5 wird durch abwechselnde Druckbeaufschlagung der beiden Kolbenräume 3 und 4 in beide Betätigungsrichtungen des formschlüssigen Schaltelementes 2 jeweils eine hohe Verfahrgeschwindigkeit erreicht. Die Ansteuerung der beiden Kolbenräume 3 und 4 verfolgt über die gemeinsame Ventileinrichtung 6 bzw. den so genannten Vierkantenschieber, die in der einen Endlage den Kolbenraum 3 des formschlüssigen Schaltelementes 2 und in der anderen Endlage den Kolbenraum 4 mit Betätigungsdruck versorgt.

Die Ventileinrichtung 6 ist mit einem großen Verfahrweg ausgeführt, um ein gleichzeitiges Ansteuern der beiden Kolbenräume 3 und 4 zu vermeiden. Zusätzlich ist die Ventileinrichtung mit einer Neutralstellung ausgeführt, in der beide Kolbenräume 3 und 4 mit einem Tankdruck oder mit einem Vorbefülldruck eines im Wesentlichen drucklosen Bereich 11 des hydraulischen Systems 1 beaufschlagt sind. Die Neutralstellung des Ventilschiebers 9 der Ventileinrichtung 6 ist idealerweise dann erreicht, wenn sich der Vorsteuerdruck p_V im Wesentlichen zwischen seinen Extremwerten befindet. Im vorliegenden Fall erstreckt sich die Neutralstellung der Ventileinrichtung 6 zwischen den Vorsteuerdruckwerten p_V1 und p_V2.

Zum Vorsteuerdruck p_V gleich null befindet sich der Ventilschieber 9 in seiner ersten Endstellung und die zweite Steuerkante 62 ist vollständig geöffnet, weshalb der Systemdruck p_sys im Wesentlichen unverändert in den ersten Kolbenraum 3 als Betätigungsdruck p_ein weitergeleitet wird. Das formschlüssige Schaltelement 2 ist in diesem Betriebszustand der Ventileinrichtung 7 bzw. des Hydrauliksystems 1 eingelegt.

Mit steigendem Vorsteuerdruckwert p_V wird der Ventilschieber 9 entgegen der Federeinrichtung 10 zunehmend verschoben und der Betätigungsdruck p_ein im ersten Kolbenraum 3 sinkt kontinuierlich ab, bis der Vorsteuerdruckwert p_V1 erreicht ist und die zweite Steuerkante 62 von dem Ventilschieber 9 vollständig verschlossen ist. Die vierte Steuerkante 64 ist dann mit dem drucklosen Bereich 11 verbunden. Mit weiter steigendem Vorsteuerdruck p_V und zunehmendem Verstellweg des Ventilschiebers 9 wird die siebte Steuerkante 67 mit der sechsten Steuerkante 66 verbunden und der Systemdruck p_sys in entsprechend gewandelter Form in Richtung des zweiten Kolbenraumes 4 weitergeleitet.

Im Bereich der Federeinrichtung 10 ist der Ventilschieber 9 im Wesentlichen hohlzylindrisch ausgeführt und begrenzt mit einem in den hohlzylindrischen Bereich 9A eingreifenden weiteren Kolben 12 einen Druckraum 13, der über eine Bohrung 14 des Ventilschiebers 9 mit einem vom hohlzylindrischen Bereich 9A und einem weiteren Ventilschieberabschnitt 9B begrenzten Ventilraum 15 verbunden ist. Aufgrund dieser konstruktiven Ausführung der Ventileinrichtung 7 liegt an dem Ventilschieber 9 bei Vorsteuerdruckwerten größer als der zweite Vorsteuerdruckwert p_V2 jeweils eine resultierende Gesamtkraftkomponente an, aus der wiederum der in Fig. 1 c dargestellte Verlauf des Betätigungsdruckes p_aus des zweiten Kolbenraumes 4 resultiert.

Mit dem in Fig. 1 a und Fig. 1 b dargestellten ersten Ausführungsbeispiel des hydraulischen Systems 1 ist beispielsweise durch eine aktivierte Motor-Start-Stop-Funktion ausgelöste Unterbrechung der Druckversorgung gewährleistet, dass das geschlossene formschlüssige Schaltelement 2 bei bestromtem elektrohydraulischem Aktor 7 nicht ausgelegt wird. Gleichzeitig wird bei einem Übergang in den hydraulischen Notlauf des hydraulischen Systems 1, während welchem eine Bestromung des elektrohydraulischen Aktors ausfällt und die Druckversorgung des hydraulischen Systems 1 weiterhin vorliegt, gewährleistet, dass das formschlüssige Schaltelement 2 im Bereich des zweiten Kolbenraumes 4 mit dem vollen hydraulischen Betätigungsdruck p_aus beaufschlagt und in einen geöffneten Betriebszustand überführt wird.

Wird der als Drucksteuerventil ausgeführte elektrohydraulische Aktor mit seinem maximalen Steuerstrom angesteuert, weist der Vorsteuerdruck p_V seinen minimalen Wert auf. Daraus resultiert, dass das formschlüssige Schaltelement aufgrund des minimalen Vorsteuerdruckes p_V auch dann nicht eingelegt wird, wenn die Druckversorgung p_sys abgeschaltet wird.

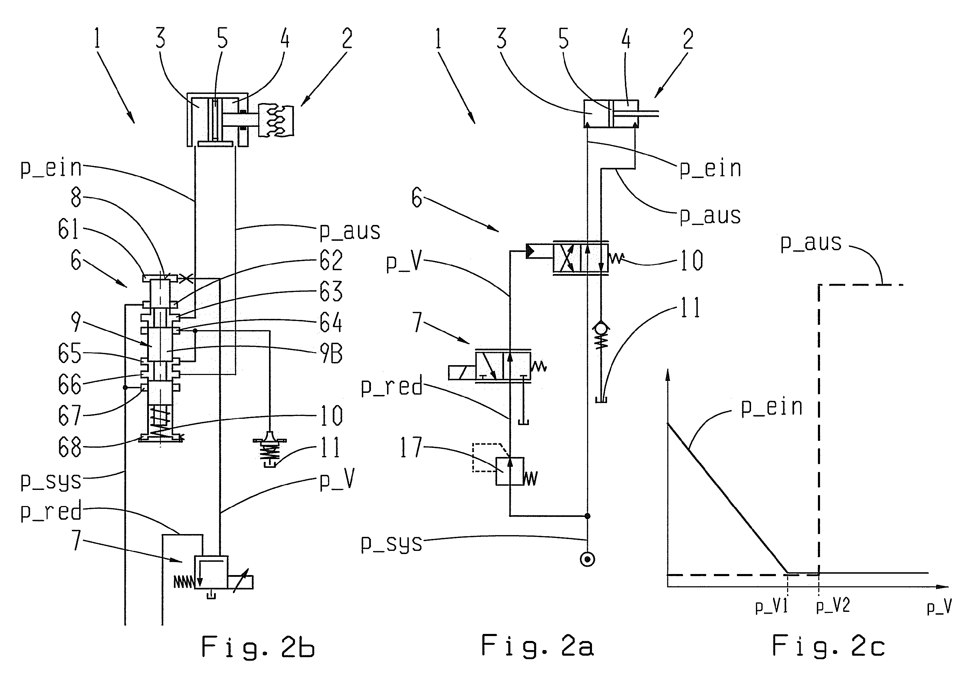

In Fig. 2a und Fig. 2b ist ein zweites Ausführungsbeispiel des hydraulischen Systems 1 gezeigt, welches sich im Wesentlichen lediglich im Bereich der Ventileinrichtung 6 vom ersten Ausführungsbeispiel des hydraulischen Systems 1 unterscheidet, weshalb in der nachfolgenden Beschreibung im Wesentlichen auf die Unterschiede zwischen den beiden Ausführungsformen näher eingegangen wird und bezüglich der weiteren Funktionsweise des Hydrauliksystems 1 gemäß Fig. 2a und Fig. 2b auf die Beschreibung zu Fig. 1a bis Fig. 1 c verwiesen wird.

Der Ventilschieber 9 der Ventileinrichtung 6 des hydraulischen Systems gemäß Fig. 2a und Fig. 2b ist ohne den hohlzylindrischen Bereich 9A des Ventilschiebers 9 der Ventileinrichtung 6 gemäß Fig. 1 b ausgeführt, weshalb der Betätigungsdruck p_aus des zweiten Kolbenraumes 4 mit Erreichen des zweiten Vorsteuerdruckwertes p_V2 sofort auf sein maximales Druckniveau umspringt. Dies resultiert aus der Tatsache, dass die mit dem Betätigungsdruck p_aus beaufschlagbare Rückkopplungsfläche des hohlzylindrischen Bereiches 9A der Ventileinrichtung 7 gemäß Fig. 1 b bei der Ausführung des hydraulischen Systems 1 gemäß Fig. 2b fehlt.

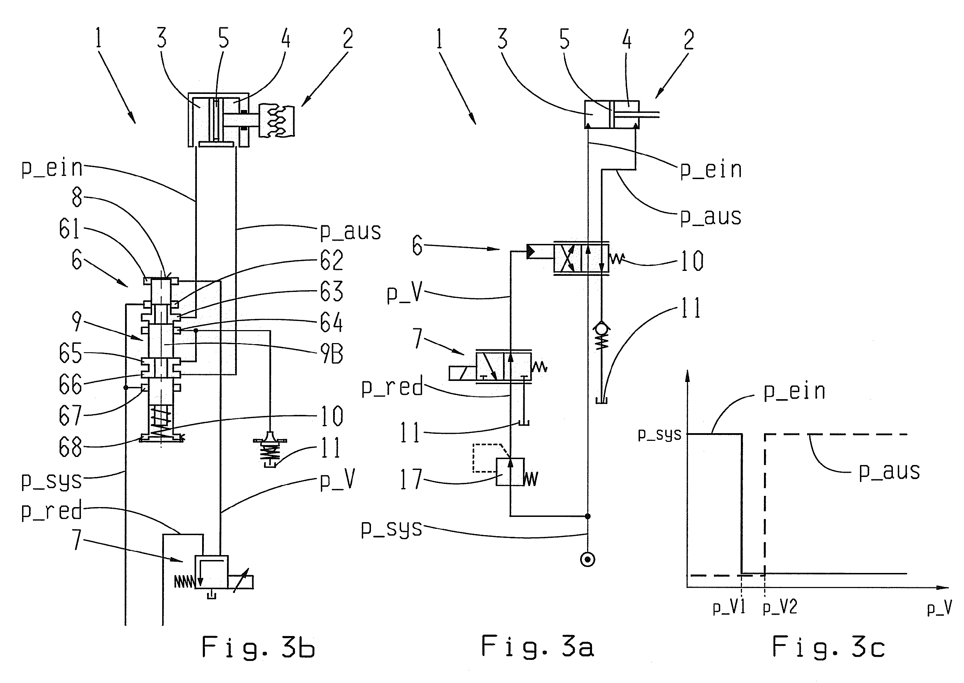

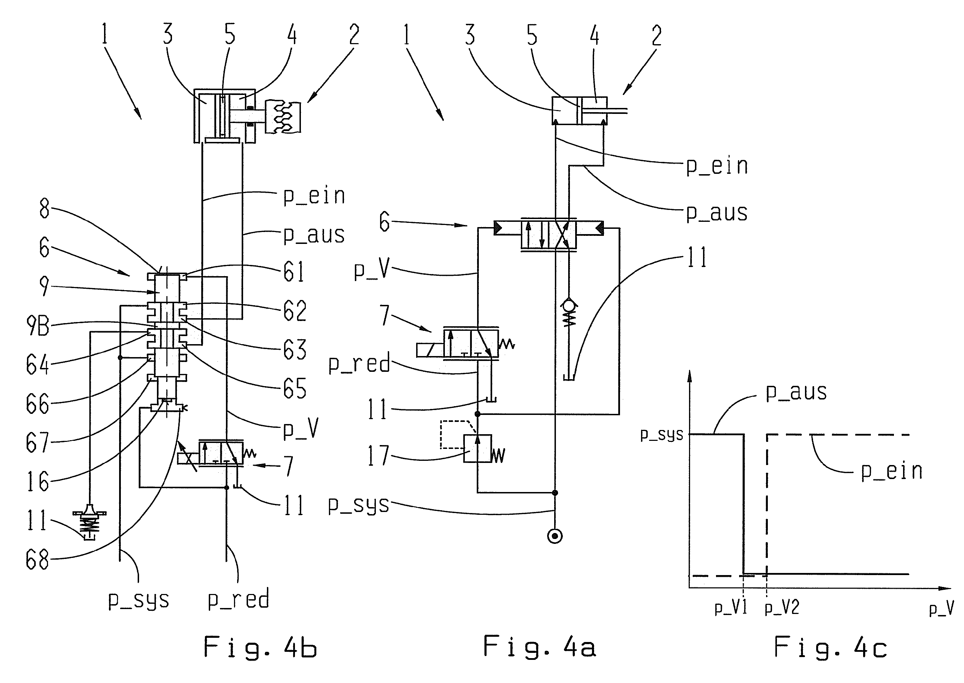

Bei dem in Fig. 3a und 3b bzw. in Fig. 4a und 4b dargestellten weiteren Ausführungsbeispielen des hydraulischen Systems ist der elektrohydraulische Aktor 6 im Vergleich zur zweiten Ausführungsform des hydraulischen Systems gemäß Fig. 2a bzw. gemäß Fig. 2b als Magnetventil ausgeführt. In der ersten Schaltstellung des Magnetventils ist der Vorsteuerdruck p_V gleich null, während der Vorsteuerdruckwert in der zweiten Schaltstellung des Magnetventils maximal ist.

Bei der dritten und der vierten Ausführungsform des hydraulischen Systems 1 gemäß Fig. 3a und Fig. 3b oder gemäß Fig. 4a und gemäß Fig. 4b liegt die Druckschwelle des Betätigungsdruckes, ab der das formschlüssige Schaltelement 2 automatisch eingelegt wird, unterhalb eines Druckwerts des Systemdrucks p_sys, zu dem die reibschlüssigen Schaltelemente einer Getriebeeinrichtung kein Drehmoment mehr übertragen. Dieser Druckwert liegt bei an sich bekannten Getriebeeinrichtungen vorzugsweise bei einem Druck von etwa 1 bar.

Bei der vierten Ausführungsform des Hydrauliksystems 1 gemäß Fig. 4a und gemäß Fig. 4b liegt an einer weiteren Wirkfläche 16 des Ventilschiebers 9 der Ventileinrichtung 6 ein dem Vorsteuerdruck p_V entgegenwirkender Hydraulikdruck, vorliegend der Reduzierdruck p_red an. Die weitere Wirkfläche 16 ist kleiner als die mit dem Vorsteuerdruck p_V beaufschlagbare Wirkfläche 8 des Ventilschiebers 9. Damit ist sichergestellt, dass bei eingeschaltetem elektrohydraulischem Aktor 7, der vorliegend als Magnetventil ausgeführt ist, am Ventilschieber 9 eine den Ventilschieber 9 in seine zweite Endlage verschiebende Gesamtkraftkomponente angreift und der Kolbenraum 3 mit dem Betätigungsdruck p_ein beaufschlagt sowie das formschlüssige Schaltelement 2 in seinen geschlossenen Betriebszustand überführt bzw. in seinem geschlossenen Betriebszustand gehalten wird.

In deaktiviertem bzw. ausgeschaltetem Betriebszustand des elektrohydraulischen Aktors 7 ist der Vorsteuerdruck wenigstens annähernd null oder gleich null, womit der im Bereich der weiteren Wirkfläche 16 anliegende Reduzierdruck p_red den Ventilschieber 9 in seine erste Endlage zurückschiebt und der zweite Kolbenraum 4 mit dem Betätigungsdruck p_aus beaufschlagt sowie das formschlüssige Schaltelement 2 in seinen geöffneten Betriebszustand überführt wird.

Beim Stromausfall und dem damit einhergehenden Einfall des Hydrauliksystems 1 in den hydraulischen Notlauf geht der elektrohydraulische Aktor 7 bzw. das Magnetventil in seine erste Schaltstellung über und der Vorsteuerdruck p_V fällt auf 0 ab. Der Ventilschieber 9 wird dann über den im Bereich der weiteren Wirkfläche 16 anliegenden Reduzierdruck p_red in seine erste Endlage zurückgeschoben und das formschlüssige Schaltelement ausgelegt.

Während einer durch ein aktiviertes Motor-Start-Stop-System aktiv herbeigeführten Unterbrechung der Druckversorgung sinkt sowohl der im Bereich des elektrohydraulischen Aktors 7 bzw. des Magnetventils eingestellte Vorsteuerdruck p_V als auch der Reduzierdruck p_red gleichermaßen ab, womit der Ventilschieber 9 in Abhängigkeit des eingestellten Betriebszustandes des elektrohydraulischen Aktors 7 in seiner ersten Endlage oder in seiner zweiten Endlage verbleibt. Das formschlüssige Schaltelement 2 wird somit in Abhängigkeit der jeweils vorliegenden Applikation bei einer aktiven Unterbrechung der Druckversorgung durch ein Motor-Start-Stop-System eingelegt oder ausgelegt.

Bei einer weiteren in der Zeichnung nicht näher dargestellten Ausführungsform des Hydrauliksystems ist dem Ventilschieber der Ventileinrichtung eine weitere Federeinrichtung zugeordnet, die auf der einlegenden oder auslegenden Druckseite des Ventilschiebers vorgesehen ist und einen definierten Zustand des formschlüssigen Schaltelementes bei der Initialisierung des Hydrauliksystems herstellt.

Um die Position des Ventilschiebers auch bei stehendem Fahrzeug, beispielsweise während einer Hanglage, in einem definierten Zustand zu halten, ist das formschlüssige Schaltelement bei einer weiteren in der Zeichnung nicht näher dargestellten Ausführungsform mit einer in Schließrichtung des formschlüssigen Schaltelementes an dem doppeltwirkenden Kolbenelement angreifenden Federeinrichtung bzw. mit einer Einlegefeder ausgerüstet. Damit ist gewährleistet, dass das formschlüssige Schaltelement aufgrund äußerer Einflüsse nicht ungewollt in seinen geöffneten Betriebszustand überführt wird. Dabei ist jedoch zu beachten, dass die Federkraft einen vordefinierten Wert nicht übersteigt, um ein ungewolltes Einlegen des formschlüssigen Schaltelementes, beispielsweise während unerwünschter Druckeinbrüche im Bereich der Druckversorgung, auf einfach Art und Weise zu vermeiden.

Durch die Verwendung einer als Vierkantenschieber bzw. als 4/2-Wegeventil ausgeführten Ventileinrichtung in Verbindung mit einem elektrohydraulischen Aktor, der im stromlosen Zustand einen maximalen Vorsteuerdruck zur Verfügung stellt, ist eine hohe Einlegekraft bzw. eine steuerbare Einlegegeschwindigkeit im Bereich eines formschlüssigen Schaltelementes umsetzbar, wobei bei einer Ausführung des elektrohydraulischen Aktors als Drucksteuerventil eine kontinuierliche Kennlinie im Bereich des Betätigungsdruckes des formschlüssigen Schaltelementes sowohl in Einlegerichtung als auch in Auslegerichtung realisierbar ist.

Des Weiteren ist eine hohe Auslegekraft im Bereich des formschlüssigen Schaltelementes zur Verfügung stellbar, um bei einem Ausfall der Steuerung ein sicheres Auslegen des formschlüssigen Schaltelementes zu gewährleisten. Darüber hinaus ist ein automatisches Einlegen des formschlüssigen Schaltelementes bei stehendem Verbrennungsmotor auf konstruktiv einfache Art und Weise realisiert, um einen möglichst schnellen Fahrzeugstart durchführen zu können.

Das formschlüssige Schaltelement bleibt beim Abstellen des Motors eingelegt, wodurch ein schneller Motor- und Fahrzeugstart beispielsweise während eines aktivierten Motor-Start-Stop-Betriebes sichergestellt werden kann. Ein unerwünschtes Auslegen des formschlüssigen Schaltelementes bei Druckeinbrüchen im Bereich des Systemdruckes ist ebenfalls mit geringem Aufwand vermeidbar.

### Bezugszeichen

- 1: hydraulisches System
- 2: formschlüssiges Schaltelement
- 3,4: Kolbenraum
- 5: Kolbenelement
- 6: Ventileinrichtung
- 7: elektrohydraulischer Aktor
- 8: Wirkfläche
- 9: Ventilschieber
- 9A: hohlzylindrischer Bereich des Ventilschiebers
- 9B: weiterer Ventilschieberabschnitt
- 10: Federeinrichtung
- 11: druckloser Bereich
- 12: weiterer Kolben
- 13: Druckraum
- 14: Bohrung
- 15: Ventilraum
- 16: weitere Wirkfläche
- 17: Druckreduzierventil
- 61 bis 68: Steuerkante
- p_aus, p_ein: Betätigungsdruck
- p_red: Reduzierdruck
- p_sys: Systemdruck
- p_V: Vorsteuerdruck
- p_V1, p_V2: Vorsteuerdruckwert

## Patentansprüche

1. Hydraulisches System (1) zur Betätigung eines formschlüssigen Schaltelementes (2) einer Getriebeeinrichtung mit zwei Kolbenräumen (3, 4) und wenigstens einem die Kolbenräume (3, 4) begrenzenden doppeltwirkenden Kolbenelement (5), welches im Bereich eines der Kolbenräume (4) mit einem in Öffnungsrichtung des Schaltelementes (2) wirkenden Betätigungsdruck (p_aus) und im Bereich des weiteren Kolbenraumes (3) mit einem in Schließrichtung des Schaltelementes (2) wirkenden Betätigungsdruck (p_ein) beaufschlagbar ist, wobei der Betätigungsdruck (p_ein oder p_aus) über eine Ventileinrichtung (6) dem einen oder dem anderen Kolbenraum (3 oder 4) zuführbar ist und die Ventileinrichtung (6) über einen elektrohydraulischen Aktor (7) mit einem Vorsteuerdruck (p_V) betätigbar ist, **dadurch gekennzeichnet, dass** die Ventileinrichtung (6) und der elektrohydraulische Aktor (7) derart ausgeführt und miteinander wirkverbunden sind, dass bei einem Druckabfall eine in Schließrichtung des Schaltelementes (2) wirkende hydraulische Gesamtkraftkomponente an dem Kolbenelement (5) anliegt, während bei einem Ausfall der Bestromung des Aktors (7) eine in Öffnungsrichtung des Schaltelementes (2) wirkende hydraulische Gesamtkraftkomponente an dem Kolbenelement (5) angreift.

2. Hydraulisches System nach Anspruch 1, **dadurch gekennzeichnet, dass** der im Bereich des Aktors (7) einstellbare Vorsteuerdruck (p_V) an einer Wirkfläche (8) eines Ventilschiebers (9) der Ventileinrichtung (6) anlegbar ist.

3. Hydraulisches System nach Anspruch 2, **dadurch gekennzeichnet, dass** am Ventilschieber (9) eine dem Vorsteuerdruck (p_V) entgegenwirkende Federeinrichtung (10) angreift.

4. Hydraulisches System nach Anspruch 2, **dadurch gekennzeichnet, dass** im Bereich einer weiteren Wirkfläche (16) des Ventilschiebers (9) ein dem Vorsteuerdruck (p_V) entgegenwirkender Hydraulikdruck (p_red) anlegbar ist.

5. Hydraulisches System nach Anspruch 4, **dadurch gekennzeichnet, dass** die Wirkfläche (8) größer als die weitere Wirkfläche (16) des Ventilschiebers (9) ist, wobei der an der weiteren Wirkfläche (16) anlegbare Hydraulikdruck (p_red) dem am Aktor (7) anliegenden Versorgungsdruck entspricht, in dessen Abhängigkeit der im Bereich des Aktors (7) einstellbare Vorsteuerdruck (p_V) steht.

6. Hydraulisches System nach einem der Ansprüche 1 bis 5, **dadurch gekennzeichnet, dass** der Aktor (7) als ein Drucksteuerventil ausgebildet ist, in dessen Bereich der Vorsteuerdruck (p_V) mit steigendem Steuerstrom ansteigt.

7. Hydraulisches System nach einem der Ansprüche 1 bis 5, **dadurch gekennzeichnet, dass** der Aktor (7) als ein Drucksteuerventil ausgebildet ist, in dessen Bereich der Vorsteuerdruck (p_V) mit steigendem Steuerstrom abfällt.

8. Hydraulisches System nach einem der Ansprüche 1 bis 5, **dadurch gekennzeichnet, dass** der Aktor (7) als ein Magnetventil ausgebildet ist, in dessen Bereich der Vorsteuerdruck (p_V) in bestromtem Zustand in Richtung der Ventileinrichtung (6) durchgeschaltet ist.

9. Hydraulisches System nach einem der Ansprüche 1 bis 5, **dadurch gekennzeichnet, dass** der Aktor (7) als ein Magnetventil ausgebildet ist, in dessen Bereich der Vorsteuerdruck (p_V) in unbestromtem Zustand in Richtung der Ventileinrichtung (6) durchgeschaltet ist.

10. Hydraulisches System nach einem der Ansprüche 1 bis 9, **dadurch gekennzeichnet, dass** an dem Kolbenelement eine in Schließrichtung des Schaltelementes wirkende Federeinrichtung angreift.

## Claims

1. Hydraulic system (1) for actuating a positively locking shifting element (2) of a transmission device having two piston spaces (3, 4) and at least one double-acting piston element (5) which delimits the piston spaces (3, 4) and can be loaded in the region of one of the piston spaces (4) with an actuating pressure (p_off) which acts in the opening direction of the shifting element (2) and in the region of the further piston space (3) with an actuating pressure (p_on) which acts in the closing direction of the shifting element (2), it being possible for the actuating pressure (p_on or p_off) to be fed via a valve device (6) to the one or the other piston space (3 or 4), and it being possible for the valve device (6) to be actuated via an electrohydraulic actuator (7) with a pilot control pressure (p_V), **characterized in that** the valve device (6) and the electrohydraulic actuator (7) are configured and operatively connected to one another in such a way that, in the case of a pressure drop, a hydraulic overall force component which acts in the closing direction of the shifting element (2) bears against the piston element (5), whereas, in the case of an absence of the energization of the actuator (7), a hydraulic overall force component which acts in the opening direction of the shifting element (2) acts on the piston element (5).

2. Hydraulic system according to Claim 1, **characterized in that** the pilot control pressure (p_V) which can be set in the region of the actuator (7) can be applied to an active area (8) of a valve slide (9) of the valve device (6).

3. Hydraulic system according to Claim 2, **characterized in that** a spring device (10) which counteracts the pilot control pressure (p_V) acts on the valve slide (9).

4. Hydraulic system according to Claim 2, **characterized in that** the hydraulic pressure (p_red) which counteracts the pilot control pressure (p_V) can be applied in the region of a further active area (16) of the valve slide (9).

5. Hydraulic system according to Claim 4, **characterized in that** the active area (8) is greater than the further active area (16) of the valve slide (9), the hydraulic pressure (p_red) which can be applied to the further active area (16) corresponding to the supply pressure which prevails at the actuator (7), and the pilot control pressure (p_V) which can be set in the region of the actuator (7) being a function of the said supply pressure.

6. Hydraulic system according to one of Claims 1 to 5, **characterized in that** the actuator (7) is configured as a pressure control valve, in the region of which the pilot control pressure (p_V) rises as the control current rises.

7. Hydraulic system according to one of Claims 1 to 5, **characterized in that** the actuator (7) is configured as a pressure control valve, in the region of which the pilot control pressure (p_V) drops as the control current rises.

8. Hydraulic system according to one of Claims 1 to 5, **characterized in that** the actuator (7) is configured as a solenoid valve, in the region of which the pilot control pressure (p_V) is connected through in the direction of the valve device (6) in the energized state.

9. Hydraulic system according to one of Claims 1 to 5, **characterized in that** the actuator (7) is configured as a solenoid valve, in the region of which the pilot control pressure (p_V) is connected through in the direction of the valve device (6) in the non-energized state.

10. Hydraulic system according to one of Claims 1 to 9, **characterized in that** a spring device which acts in the closing direction of the shifting element acts on the piston element.

## Revendications

1. Système hydraulique (1) pour actionner un élément de changement de rapports (2) à complémentarité de formes d'un mécanisme de transmission comprenant deux espaces de piston (3, 4) et au moins un élément de piston (5) à double action limitant les espaces de piston (3, 4), lequel, dans la région de l'un des espaces de piston (4), peut être sollicité avec une pression d'actionnement (p_aus) agissant dans la direction d'ouverture de l'élément de changement de rapports (2) et, dans la région de l'autre espace de piston (3), peut être sollicité avec une pression d'actionnement (p_ein) agissant dans la direction de fermeture de l'élément de changement de rapports (2), la pression d'actionnement (p_ein ou p_aus) pouvant être acheminée par le biais d'un dispositif de soupape (6) à l'un ou l'autre espace de piston (3 ou 4) et le dispositif de soupape (6) pouvant être actionné par le biais d'un actionneur électrohydraulique (7) avec une pression pilote (p_V), **caractérisé en ce que** le dispositif de soupape (6) et l'actionneur électrohydraulique (7) sont réalisés et connectés fonctionnellement l'un à l'autre de telle sorte que dans le cas d'une chute de pression, une composante de force totale hydraulique agissant dans la direction de fermeture de l'élément de changement de rapports (2) s'applique au niveau de l'élément de piston (5), tandis que dans le cas d'une panne d'alimentation de l'actionneur (7), une composante de force totale hydraulique agissant dans la direction d'ouverture de l'élément de changement de rapports (2) s'exerce au niveau de l'élément de piston (5).

2. Système hydraulique selon la revendication 1, **caractérisé en ce que** la pression pilote (p_V) pouvant être ajustée dans la région de l'actionneur (7) peut être appliquée à une surface d'action (8) d'un tiroir de soupape (9) du dispositif de soupape (6).

3. Système hydraulique selon la revendication 2, **caractérisé en ce qu'**un dispositif de ressort (10) agissant à l'encontre de la pression pilote (p_V) agit au niveau du tiroir de soupape (9).

4. Système hydraulique selon la revendication 2, **caractérisé en ce que** dans la région d'une autre surface d'action (16) du tiroir de soupape (9) peut être appliquée une pression hydraulique (p_red) agissant à l'encontre de la pression pilote (p_V).

5. Système hydraulique selon la revendication 4, **caractérisé en ce que** la surface d'action (8) est plus grande que l'autre surface d'action (16) du tiroir de soupape (9), la pression hydraulique (p_red) pouvant être appliquée à l'autre surface d'action (16) correspondant à la pression d'alimentation s'appliquant au niveau de l'actionneur (7), de laquelle dépend la pression pilote (p_V) pouvant être ajustée dans la région de l'actionneur (7).

6. Système hydraulique selon l'une quelconque des revendications 1 à 5, **caractérisé en ce que** l'actionneur (7) est réalisé sous forme de soupape à commande de pression, dans la région de laquelle la pression pilote (p_V) augmente avec l'augmentation du courant de commande.

7. Système hydraulique selon l'une quelconque des revendications 1 à 5, **caractérisé en ce que** l'actionneur (7) est réalisé sous forme de soupape de commande de pression, dans la région de laquelle la pression pilote (p_V) chute avec l'augmentation du courant de commande.

8. Système hydraulique selon l'une quelconque des revendications 1 à 5, **caractérisé en ce que** l'actionneur (7) est réalisé sous forme d'électrovanne, dans la région de laquelle la pression pilote (p_V) est commutée dans la direction du dispositif de soupape (6) dans l'état alimenté en courant.

9. Système hydraulique selon l'une quelconque des revendications 1 à 5, **caractérisé en ce que** l'actionneur (7) est réalisé sous forme d'électrovanne, dans la région de laquelle la pression pilote (p_V) est commutée dans la direction du dispositif de soupape (6) dans l'état non alimenté en courant.

10. Système hydraulique selon l'une quelconque des revendications 1 à 9, **caractérisé en ce qu'**un dispositif de ressort agissant dans la direction de fermeture de l'élément de changement de rapports agit au niveau de l'élément de piston.
